# EUROPEAN PATENT APPLICATION

(11) **EP 1 870 629 A2**
(43) Date of publication of application: **26.12.2007**
(21) Application number: 07015163.4
(22) Date of filing: 25.01.2005
(51) Int. Cl.: F16L 59/153, F16L 11/08

(54) **Flexible air-duct with internal insulation of foamed polyethylene**

(30) Priority: 04.02.2004 GR 2004100038
(62) Divisional of application: 05386003.7
(71) Applicant: Apostolos, Davlaras, 572 00 Langada (GR)
(72) Inventor: Apostolos, Davlaras, 572 00 Langada (GR)

(57) **Abstract**

It is an improved flexible air covering used for hot or cold gas transfer in buildings for heating or even cooling of the spaces of a building, which consists of a metal or even a plastic skeleton of helical shape (3) having an outer covering (2) or without, made of finished polyester leaf, or finished leaf of aluminum or even of any other suitable material and internally having insulation of foamed insulating material (4) polyethylene or and ether ethylene products or even any other suitable foamed material covered by a synthetic film or any other suitable material or without (5) with circular form.

The air covering is used either beat or in straight obvious application in installations of cooling and heating colored or nut and in any other geometrical pattern (square, triangle, parallelogram. e.t.c.)

## Description

The invention pertains to an improved construction of a flexible air duct with inner insulation of foamed material.

Flexible air ducts are constructed using a steel wire or other metal as skeleton and fiberglass as insulating material.

This thickness of insulation, that is necessary for minimizing of heat or cooling losses from or to the surrounding space, is the one that makes these air ducts difficult to operate.

More specifically, duct's flexibility is reduced due to this thickness.

In the case that flexible air ducts are used for the transfer of cool air for air-conditioning of spaces, an undesired liquefaction of the surrounding air humidity is developed externally of the air duct with negative results (water dripping) to duct's function, mainly when placed above furred ceilings.

Finally, new sanitary and safety specifications impose limitations to fiberglass use.

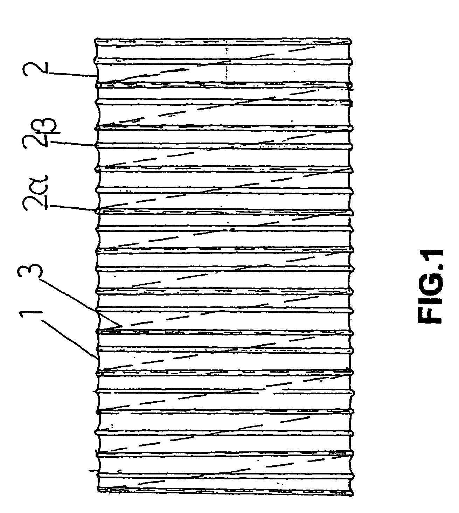

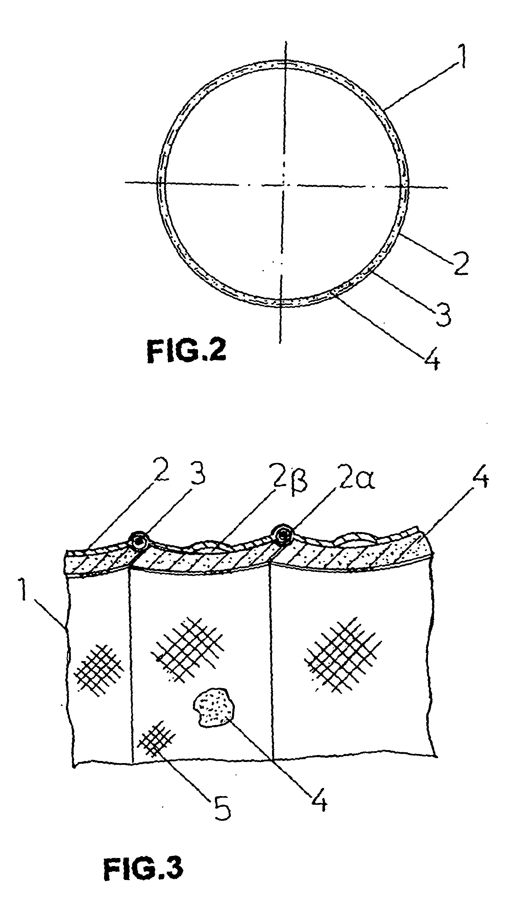

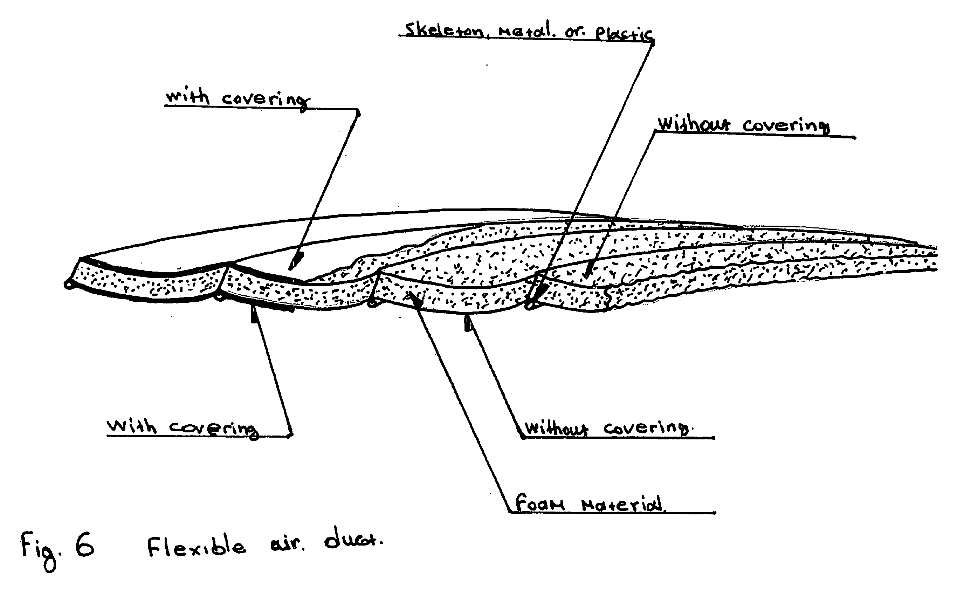

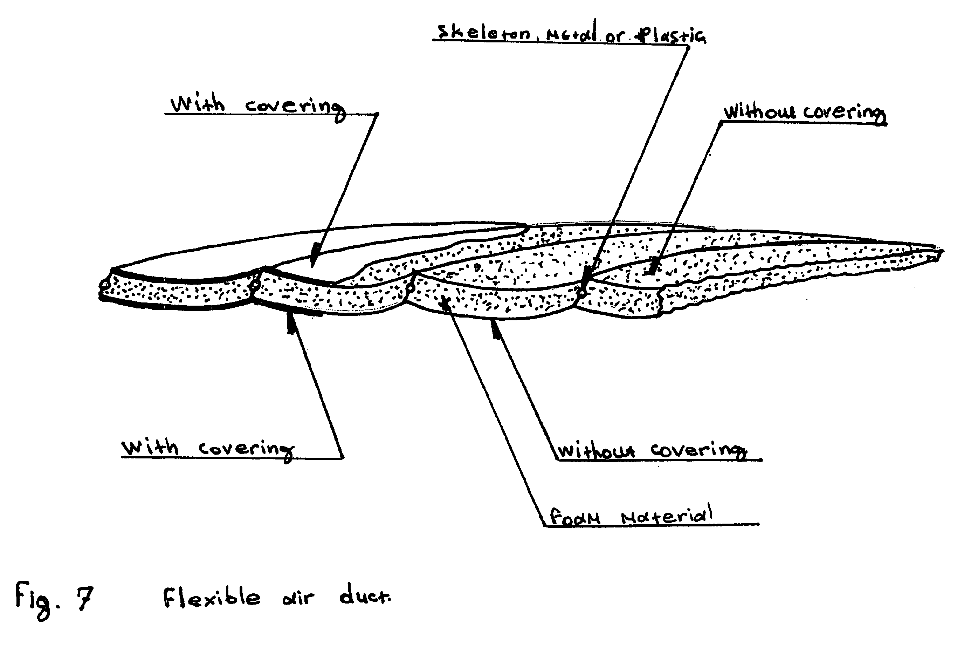

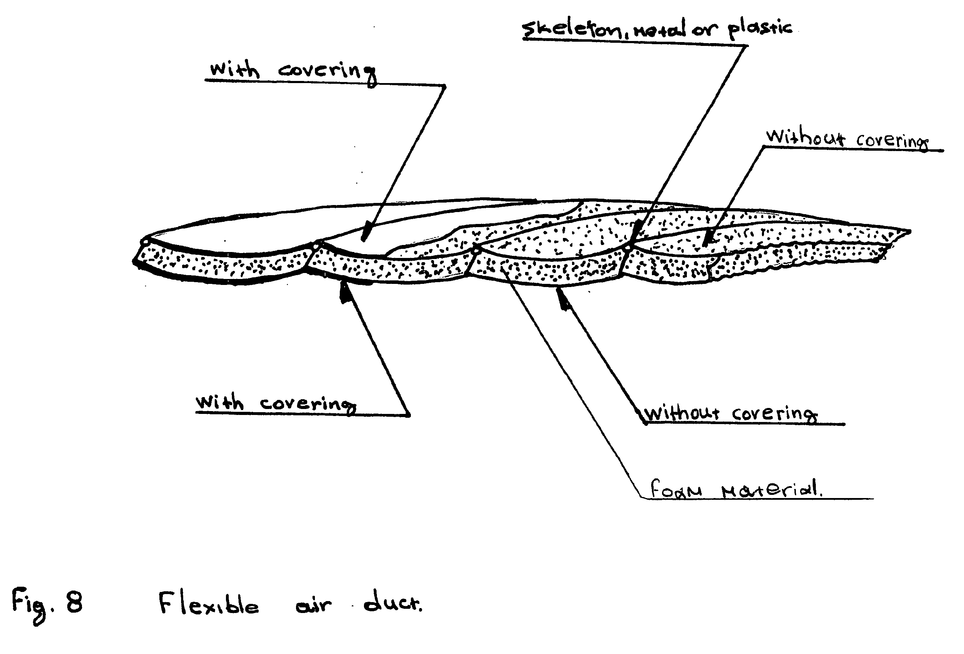

On the contrary, making use of my air duct we have the following advantages:
The use of foamed material as inner insulating material (polyethylene or even other ethylene products or even any suitable foamed material) leads to elimination of liquefaction on the outer walls of the flexible air duct.
At this part, the required thickness of insulation is much smaller than the corresponding thickness of fiberglass for the same results of insulation.
Reduction of weight increases air duct's flexibility.
It presents satisfactory results in the sector of soundproofing and B1 class incombustibility with the suitable materials we use. This invention presents a flexible air duct made of a metal skeleton of wire cross-section and helical shape externally lagged with a thin leaf of polyester, or steel
   or any other suitable material and internally covered with foamed material (polyethylene or even other ethylene products or even suitable foamed material) which also has an inner covering of synthetic
   material of film form or of any other suitable material or even without use of inner covering.
It is also possible to be constructed even without use of outer wall, that is a flexible air duct that consists of metal skeleton made of steel wire of helical shape, embodied in the insulating foamed material (polyethylene or even other ethylene products or even any suitable foamed material), or the metal skeleton is placed internally or externally of the insulating foamed material.
A practical application is provided concerning the attached drawings:
   Intermediate placing of the metal skeleton, Figure 6.
   Inner placing of the metal skeleton, Figure 7.
   Outer placing of the metal skeleton, Figure 8.
   On application of figures 6, 7, 8 the metal skeleton can be replaced by a plastic skeleton or even any other suitable hard material.
   For reasons of cost, the inner wall of polyester material has been removed, as it leaded to heavier and of course more expensive construction.
   A practical application is provided concerning the attached drawings:
      Front view of the flexible air duct, Figure 1.
      Side view of the flexible air duct, Figure 2.
      Partial sectional view of the flexible air duct's formation. Figure 3.
      Pertaining to the drawings, the improved flexible air duct (1) use for hot or cold gas transfer consists of a metal or even plastic skeleton of any cross-section (3) and helical shape externally covered by a thin leaf of finished metalysed polyester or finished leaf of steel or any other suitable material that forms holes (2a) for the embodiment of the wire, as well as gaps (2b) at the direct soldering with the inner insulation (4) made of foamed insulating material (polyethylene or even other ethylene products or even any suitable foamed material).
      Finally, the foamed material is covered by a synthetic material (5) in a film form or even of any other suitable material for the development of a smooth inner surface of the air duct useful for non-reduction of the velocity of the air.

The improved flexible air duct is constructed in various dimensions (length, thickness of covering, diameter of the aid duct), as well as a metal skeleton is used of any dimension (length, pitch of thread, wire cross-section), depending on constructive requirements of their use.

The used materials are always the suitable ones of the market that are used for flexible air ducts construction always following this constructive principle (outer covering, or without - coil skeleton - inner foamed insulation with covering of synthetic material or without).

Finally apart from the flexible form it can also be used in a straight, obvious or not, application.

The flexible air duct can be constructed of the used materials in all colours available for their external appearance.

And finally the flexible air duct can be constructed beyond circular cross-section, in any other form such as square, parallelogram, triangular.

## Claims

1. Flexible air duct with inner insulation of foamed polyethylene for hot or cold gas transfer. The air duct has circular cross-section and diameter from 50 mm up to 1.000 mm. It is constructed of an inner and an outer leaf in which a metal or even a plastic skeleton are embedded of any cross-section and thickness from 0.3 to 20 mm and disposes helical distribution along the air duct with pitch of thread from 10 to 200 mm. The inner or outer walls of the air duct are made either of leaf of metalysed polyester or of leaf of aluminum or any other suitable material, finished or not, colored or not with any thickness of materials. The insulating material embedded between the inner and the outer wall is foamed polyethylene or ethylene products or even any suitable foamed material with thickness from 0.2 up to 20 mm.

2. Our flexible air ducts are intended for use in buildings for air-heating or air-cooling of the spaces of the buildings or in any other application.

3. The improved flexible air duct (1) consists of a metal or plastic skeleton of any cross-section (3) covered externally by a thin leaf (2) of polyester or by any other suitable material as well as by insulation (4) that is foamed insulating material (polyethylene or even other ethylene products or even any other foamed suitable material) which is also covered by a synthetic material (5) in film form or not.

4. An improved flexible air duct (1) as in claim 1, which is **characterized by** the fact that the outer covering, being a thin leaf (2), on its soldering with the metal skeleton, forms holes (2a) for the embodiment of the wire as well as gaps (2b) on the direct soldering with the inner insulation (4) which reinforce insulation due to development of air lock in between.

5. An improved flexible air duct (1) as in claims 1 and 4, which is **characterized by** the fact that it is constructed in any dimension or/and form (straight, bent, circular, square, triangular, or parallelogram) with materials market always provides colored or not.

6. As on construction of an improved flexible air duct without or even without outer or inner coverings, constructed only of foamed polyethylene or even ethylene products or even any suitable foamed material again for the same use as in claim 2 however with other constructive principle as appears in the attached drawings with intermediate placing of the skeleton (6), with inner placing of the skeleton (7) and with outer placing of the skeleton (8) regardless of being plastic or metal.

7. The new improved flexible air duct with inner insulation of foamed material is constructed of B 1 class incombustibility and presents satisfactory sound proofing elements.
